# EUROPÄISCHE PATENTSCHRIFT

(11) **EP 1 423 453 B1**
(45) Veröffentlichungstag und Bekanntmachung des Hinweises auf die Patenterteilung: **22.12.2004**
(21) Anmeldenummer: 02776935.5
(22) Anmeldetag: 20.08.2002
(51) Int. Cl.: C08G 65/20, C08G 65/26

(54) **VERFAHREN ZUR HERSTELLUNG EINER ALKOHOLISCHEN LÖSUNG VON POLYTETRAHYDROFURAN MIT ENDSTÄNDIGEN OH-GRUPPEN**
METHOD FOR PRODUCING AN ALCOHOLIC SOLUTION OF POLYTETRAHYDROFURANE THAT COMPRISES TERMINAL OH GROUPS
PROCEDE POUR REALISER UNE SOLUTION ALCOOLIQUE A PARTIR DE POLYTETRAHYDROFURANE A GROUPES OH TERMINAUX

(30) Priorität: 21.08.2001 DE 10140949
(43) Veröffentlichungstag der Anmeldung: 02.06.2004
(73) Patentinhaber: BASF Aktiengesellschaft, 67056 Ludwigshafen (DE)
(72) Erfinder: CIPRIAN, Jürgen, 67071 Ludwigshafen (DE); BEER, Wulfrich Friedemann, 67434 Neustadt (DE); MENGER, Volkmar, 67434 Neustadt (DE)
(74) Vertreter: Isenbruck, Günter, Dr.
(86) Internationale Anmeldenummer: PCT/EP2002/009297
(87) Internationale Veröffentlichungsnummer: WO 2003/018666

(56) Entgegenhaltungen:
- EP-A- 0 376 157
- EP-A- 0 927 732

## Beschreibung

Die Erfindung betrifft ein Verfahren zur Herstellung einer alkoholischen Lösung von Polytetrahydrofuran mit endständigen OH-Gruppen aus dem entsprechenden Polytetramethylenether mit Acyloxyendgruppen durch Umesterung mit Alkoholen in Gegenwart eines alkali- oder erdalkalimetallhaltigen Katalysators, wobei im Anschluß an die Umesterung die Alkali- oder Erdalkalimetallionen durch Überleiten über einen Ionenaustauscher abgetrennt werden.

Aus der DE-A 197 58 296, die hiermit voll umfänglich in den Offenbarungsgehalt der vorliegenden Patentanmeldung einbezogen wird, ist bekannt, Polytetrahydrofuran mit endständigen Hydroxylgruppen, im folgenden abgekürzt mit PTHF bezeichnet, unter Verwendung kationischer Katalysatorsysteme aus Tetrahydrofuran herzustellen. Dabei wird in einem ersten Schritt ein Polytetramethylenether mit Acyloxyendgruppen erhalten, die vom Initiatorsystem und Reaktionsmedium abhängig sind. Diese Acyloxyendgruppen im primär erhaltenen Polymer werden dann durch Umesterung mit niederen Alkoholen, insbesondere mit C₁- C₄-Alkoholen, bevorzugt mit Methanol, in Gegenwart von alkalischen Katalysatoren, vorzugsweise von Natriummethylat, in Alkoholfunktionen umgewandelt. Im Anschluß an die Umesterung muß das aus dem Katalysator stammende Natrium in ionogener Form wieder aus der alkoholischen, insbesondere methanolischen PTHF-Lösung entfernt werden, da es beim nachfolgenden Einsatz des PTHF, überwiegend für Polyurethan-Anwendungen, stören würde. Die Abtrennung der Natriumionen erfolgt hierbei durch unmittelbares Überleiten der alkoholischen, insbesondere methanolischen PTHF-Lösung über mindestens ein Ionenaustauscherfestbett.

Demgegenüber war es Aufgabe der Erfindung, ein Verfahren zur Abtrennung der Alkalioder Erdalkalimetallionen mittels eines Ionenaustauschers zur Verfügung zu stellen, das einfacher und wirtschaftlicher, insbesondere vollkontinuierlich, durchgeführt werden kann.

Die Lösung geht aus von einem Verfahren zur Herstellung einer alkoholischen Lösung von Polytetrahydrofuran mit endständigen OH-Gruppen (PTHF) aus dem entsprechenden Polytetramethylenether mit Acyloxyendgruppen durch Umesterung mit Alkoholen in Gegenwart eines alkali- oder erdalkalimetallhaltigen Katalysators, wobei die alkoholische PTHF-Lösung im Anschluss an die Umesterung zur Abtrennung der Alkali- oder Erdalkalimetallionen in Gegenwart einer katalytischen Menge Wasser unmittelbar durch zumindest einen Ionenaustauscher geleitet wird.

Die Erfindung ist dadurch gekennzeichnet, daß man die Abtrennung der Alkali- oder Erdalkalimetallionen in einer vollkontinuierlichen Ionenaustauschanlage durchführt, die aufweist:
- mehrere Ionenaustauscherzellen, die auf einer Drehplattform angeordnet sind, mit jeweils einem Verteil- und einem Sammelelement und
- ein Zentralventil mit einer Stator- und einer Rotorscheibe, über das die Zuführung und Abführung sämtlicher Flüssigkeitsströme in die lonenaustauschanlage erfolgt, sowie mit
- Zu- und Abfuhrleitungen vom Verteil- bzw. Sammelelement jeder Ionenaustauscherzelle zum Zentralventil.

Das Verfahren wird somit erfindungsgemäß in einer vollkontinuierlichen Anlage durchgeführt, d.h. in einer Anlage, die grundsätzlich dauernd in Betrieb sein kann. Ein gegebenenfalls erforderlicher Austausch von Ionenaustauscherharz in einzelnen Ionenaustauscherzellen kann, insbesondere hydraulisch, bei laufendem Betrieb erfolgen. Für einen außerhalb der Anlage stehenden Beobachter laufen sämtliche Verfahrensschritte, d.h. Ionenaustausch, Waschen und Regenieren, stets an derselben räumlich unveränderten Stelle der Anlage ab.

Bevorzugt führt man die Umesterung in Gegenwart eines natriumhaltigen Katalysators durch.

Der aus der Umesterung stammende Produktstrom, der der Abtrennung von Alkali- oder Erdalkalimetallionen mittels eines Ionenaustauschers zugeführt wird, weist in der Regel einen PTHF-Gehalt im Bereich von 50 bis 60 Gew.-%, Rest Methanol auf, sowie Alkalioder Erdalkalimetallionen in einer Konzentration unterhalb von 1000 ppm, vorzugsweise von 100 bis 600 ppm. Durch den Ionenaustauschprozeß wird der Alkali- oder Erdalkalimetall der PTHF-Lösung auf Werte unterhalb von 1 ppm, vorzugsweise unterhalb 0,5 ppm, besonders bevorzugt unterhalb 0,3 ppm abgesenkt.

Der Ionenaustauschprozeß erfolgt analog dem in DE-A 197 58 296 beschriebenen Verfahren in Gegenwart katalytischer Mengen Wasser an einem stark sauren Kationenaustauscher, der insbesondere gelförmig oder als makroporöses hochvemetztes Harz vorliegen kann. Dabei laufen die dort beschriebenen Verfahrensschritte ab, d.h.:
1. Ionenaustausch unter Zuführung der PTHF-Lösung zum Ionenaustauscher,
2. Verdrängung der PTHF-Lösung unter Zuführung von Methanol,
3. erste Waschung mit destilliertem Wasser,
4. Regeneration, insbesondere mit Schwefelsäure,
5. zweite Waschung mit destilliertem Wasser und
6. Verdrängung des destillierten Wassers unter Zuführung von Methanol.

Die erfindungsgemäß eingesetzte Anlage weist einen Drehteller, d.h. einen drehbaren Träger für die Aufnahme von mehreren Ionenaustauscherzellen auf, d.h. für in der Regel hochzylindrische Kammern, die mit stark sauren Kationenaustauschern, wie sie in DE-A 197 58 296 für Festbetten beschrieben sind, gefüllt sind. Die Ionenaustauscherzellen weisen jeweils ein Verteil- und ein Sammelelement zum gleichmäßigen Verteilen bzw. Abziehen der die Ionenaustauscherzelle durchströmenden Flüssigkeit über deren gesamten Querschnitt auf.

Für die Zu- bzw. Abführung sämtlicher Flüssigkeitsströme in der Ionenaustauscheranlage ist ein einziges Zentralventil mit einer Stator- und einer Rotorscheibe vorgesehen. Das Zentralventil befindet sich üblicherweise im Mittelpunkt der kreisförmig angeordneten Ionenaustauscherzellen, in der Regel oberhalb derselben. Vom Zentralventil fuhren bevorzugt umsteckbare Zu- und Abfuhrleitungen zum Verteil- bzw. Sammelelement jeder Ionenaustauscherzelle.

Eine für die Abfolge der Verfahrensschritte beim Austausch der Alkali- oder Erdalkalimetallionen besonders geeignete Anzahl von Ionenaustauscherzellen liegt im Bereich von 20 bis 30.

Bevorzugt sind die Zu- und Abführleitungen vom Verteil- bzw. Sammelelement jeder Ionenaustauscherzelle zum Zentralventil als flexible Schlauchverbindungen ausgestaltet.

In einer bevorzugten Ausführungsvariante werden das Zentralventil und die die Ionenaustauscherzellen tragende Drehplattform jeweils getrennt angesteuert, wobei besonders bevorzugt die Drehplattform vollkontinuierlich und das Zentralventil getaktet betrieben wird. Durch diese besonders bevorzugte Ausführungsform können Cross-Kontaminationen, d.h. Fehlströme zu oder von den Ionenaustauscherzellen vermieden werden.

Bevorzugt kann man den lonenaustauschprozeß in mehreren Ionenaustauscheizellen parallel und/oder in Reihe durchführen.

Weiter bevorzugt können ein oder mehrere der Regenerier-, Wasch- und Verdrängungsschritte in mehreren Ionenaustauscherzellen parallel und/oder in Reihe durchgeführt werden.

Dadurch wird für einzelne Verfahrensschritte des Gesamtprozesses, die unterschiedlich schnell ablaufen, eine jeweils geeignete Anzahl von Ionenaustauscherzellen zur Verfugung gestellt, dergestalt, dass die unterschiedlichen Geschwindigkeiten einzelner Verfahrensschritte den vollkontinuierlichen Ablauf des Gesamtprozesses nicht beeinträchtigen.

Erfindungsgemäß wird somit ein vollkontinuierliches Verfahren zur Abtrennung der Alkali- oder Erdalkalimetallionen mittels eines Ionenaustauschers in einem Verfahren zur Herstellung von PTHF zur Verfügung gestellt.

Die erfindungsgemäß eingesetzte Anlage wird insbesondere mit einem einzigen Zentralventil gegenüber mindestens 24 Einzelventilen nach dem bekannten Verfahren unter Verwendung von zwei Festbetten gesteuert, wobei die einzelnen Ventile nach dem bekannten Verfahren grundsätzlich gegeneinander verriegelt und im Betrieb auch dicht sein mußten, somit störanfällig waren. Die erfindungsgemäß eingesetzte Anlage mit einem einzigen Zentralventil zeigt darüber hinaus eine erhöhte Flexibilität bei Prozeßvariationen, durch einfaches Umstecken der Schläuche für die Zu- bzw. Abführung von Flüssigkeiten am Zentralventil. Die flexiblen Verschaltungsmöglichkeiten führen zu dem weiteren Vorteil der Mehrfachnutzung von Wasch-, Regenerierungs- und Verdrängungsmedien und damit zu einer weiteren Reduzierung der Betriebskosten.

Die Erfindung wird im folgenden anhand einer Figur sowie von Ausfuhrungsbeispielen näher erläutert.

Es zeigen im einzelnen:
- Figur 1: die schematische Darstellung einer vollkontinuierlichen Ionenaustauschanlage für das erfindungsgemäße Verfahren und
- Figur 2: die schematische Darstellung eines Zentralventils für eine in Figur 1 dargestellte Anlage.

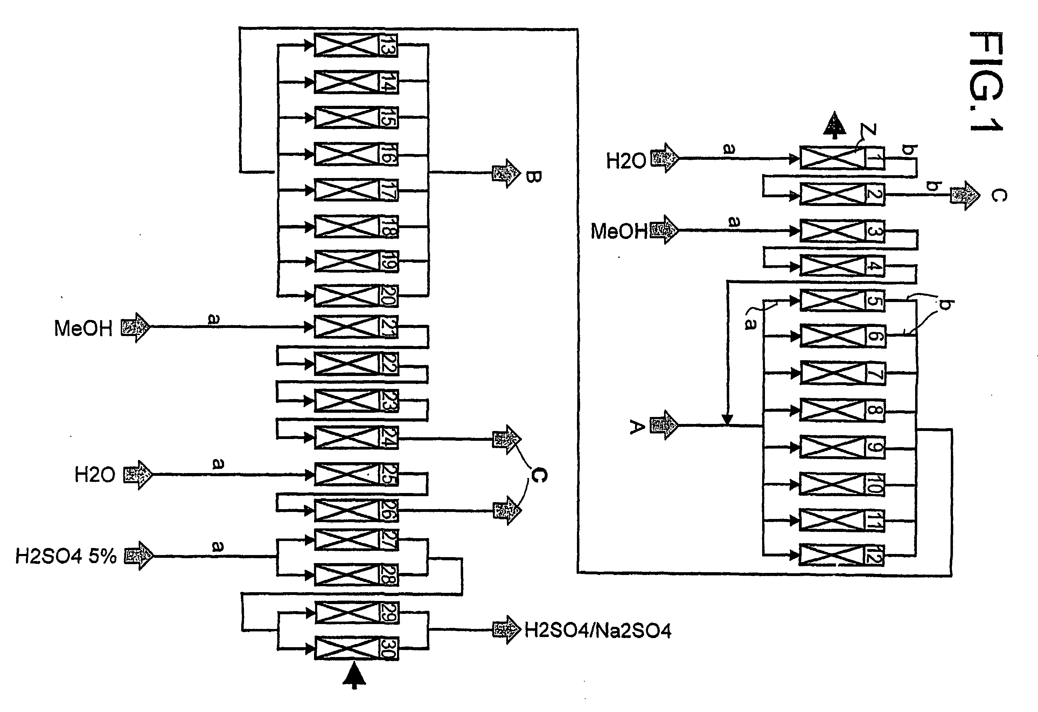

Figur 1 zeigt eine vollkontinuierliche Ionenaustauschanlage mit beispielhaft 30, von 1 bis 30 durchnummerierten Ionenaustauscheraellen Z mit Zuführleitungen a und Abführleitungen b. Die zu reinigende alkoholische PTHF-Lösung wird als Strom A den Ionenaustauscherzellen Z 5 bis 12 parallel zugeführt, gereinigt, und in einer zweiten Stufe den Ionenaustauscherzellen Z 13 bis 20 ebenfalls parallel zugeführt. In diesen Ionenaustauscherzellen Z 5 bis 20 findet der Ionenaustausch statt. Das Produkt, die gereinigte alkoholische PTHF-Lösung, wird als Strom B aus den Ionenaustauscherzellen Z 13 bis 20 abgezogen. Der nachfolgende Verfahrensschritt, die Verdrängung der alkoholischen PTHF-Lösung unter Zuführung von Methanol (MeOH), findet in den folgenden Ionenaustauscherzellen Z, die mit 3 und 4 nummeriert und in Reihe geschaltet sind, statt. Im nächsten Verfahrensschritt erfolgt die Waschung mit destilliertem Wasser, in der Figur beispielhaft dargestellt durch Zuführung von Wasser (H₂O) zu den Ionenaustauscherzellen Z 1 und 2, die in Reihe geschaltet sind. Der Spülablauf C wird aus der Ionenaustauscherzelle Z 2 abgezogen. Anschließend erfolgt die Regeneration der Ionenaustauscherzellen mittels 5%iger Schwefelsäure (H₂SO₄), vorliegend beispielhaft in den Ionenaustauscherzellen Z 27 bis 30, die parallel und in Serie geschaltet sind. Nach einer zweiten Waschung mit destilliertem Wasser (H₂O) in den in Reihe geschalteten Ionenaustauscherzellen Z 25 und 26, wobei ein Spülablauf C abgezogen wird, erfolgt die Verdrängung des destillierten Wassers unter Zuführung von Methanol (MeOH) in den in Reihe geschalteten Ionenaustauscherzellen Z 21 bis 24, ebenfalls unter Abzug eines Spülablaufs C. Die Ionenaustauscheranlage dreht sich im Betrieb in der in der Figur angegebenen Pfeilrichtung.

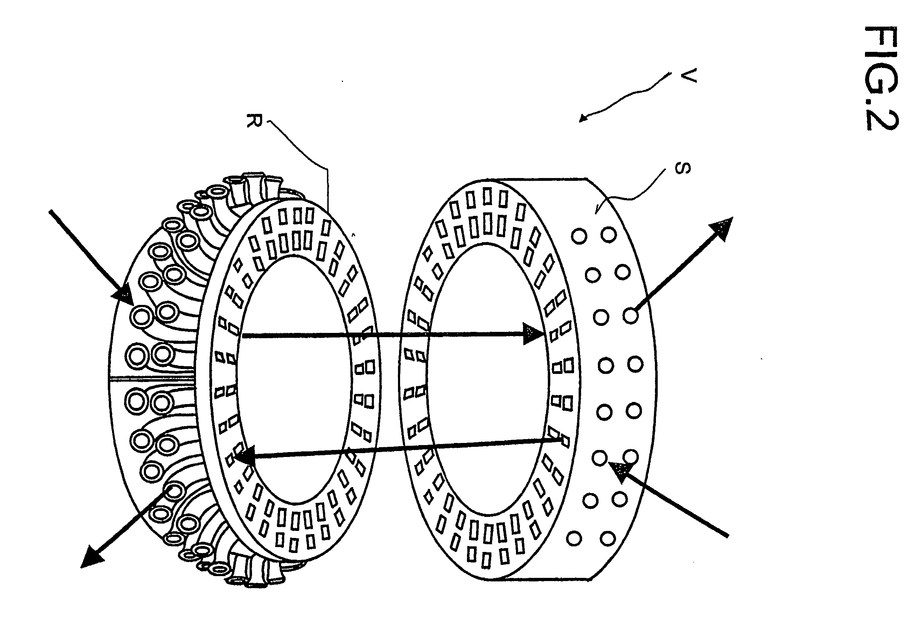

Figur 2 zeigt ein Zentralventil V mit Statorscheibe S und Rotorscheibe R mit Zu- und Abführleitungen.

### Ausführungsbeispiel:

Gegenüber der aus DE-A 197 58 296 bekannten Abtrennung von Natriumionen aus einer methanolischen, natriumhaltigen PTHF-Lösung über zwei hintereinander geschaltete Ionenaustauscher-Festbetten wurde dieselbe Trennaufgabe, d.h. die Abreicherung des Natriumgehalts derselben alkoholischen PTHF-Lösung auf eine Konzentration unterhalb von 1 ppm, unter Einsatz desselben stark sauren Kationenaustauschers in Form eines makroporösen, hochvernetzten Harzes, jedoch in einer vollkontinuierlichen Ionenaustauscheranlage, wie sie in Figur 1 dargestellt ist, durchgeführt.

Gegenüber dem in DEA 197 58 296 beschriebenen Verfahren wurden dabei folgende Einsparungen an Hilfsmitteln erzielt: Ionenaustauscherbedarf etwa 50%, Schwefelsäurebedarf etwa 10%, Methanolbedarf etwa 10% und Bedarf an destilliertem Wasser etwa 25%.

## Patentansprüche

1. Verfahren zur Herstellung einer alkoholischen Lösung von Polytetrahydrofuran mit endständigen OH-Gruppen (PTHF) aus dem entsprechenden Polytetramethylenether mit Acyloxyendgruppen durch Umesterung mit Alkoholen in Gegenwart eines alkali- oder erdalkalimetallhaltigen Katalysators, wobei die alkoholische PTHF-Lösung im Anschluss an die Umesterung zur Abtrennung der Alkali- oder Erdalkalimetallionen in Gegenwart einer katalytischen Menge Wasser unmittelbar durch zumindest einen Ionenaustauscher geleitet wird, **dadurch gekennzeichnet, daß** man die Abtrennung der Alkali- oder Erdallralimetallionen in einer vollkontinuierlichen Ionenaustauschanlage durchführt, die aufweist:
- mehrere Ionenaustauscherzellen (Z), die auf einer Drehplattform angeordnet sind, mit jeweils einem Verteil- und einem Sammelelement und
- ein Zentralventil (V) mit einer Stator (S)- und einer Rotorscheibe (R), über das die Zuführung und Abführung sämtlicher Flüssigkeitsströme in die lonenaustauschanlage erfolgt, sowie mit
- Zu(a)- und Abführleitungen (b) vom Verteil- bzw. Sammelelement jeder Ionenaustauscherzelle (2) zum Zentralventil (V).

2. Verfahren nach Anspruch 1, **dadurch gekennzeichnet, daß** man die Umesterung in Gegenwart eines natriumhaltigen Katalysators durchführt.

3. Verfahren nach Anspruch 1 oder 2, **dadurch gekennzeichnet, daß** die Ionenaustauschanlage 20 bis 30 Ionenaustauscherzellen (Z) aufweist.

4. Verfahren nach einem der Ansprüche 1 bis 3, **dadurch gekennzeichnet, daß** die Zuund Abfuhrleitungen vom Verteil- bzw. Sammelelement jeder Ionenaustauscherzelle (Z) zum Zentralventil (V) flexible Schläuche sind.

5. Verfahren nach einem der Ansprüche 1 bis 4, **dadurch gekennzeichnet, daß** das Zentralventil (V) und die Drehplattform jeweils getrennt angesteuert werden, insbesondere daß die Drehplattform vollkontinuierlich und das Zentralventil (V) getaktet betrieben wird.

6. Verfahren nach einem der Ansprüche 1 bis 5, **dadurch gekennzeichnet, daß** man den Ionenaustauschprozeß in mehreren Ionenaustauscherzellen (Z) parallel und/oder in Reihe durchführt.

7. Verfahren nach einem der Ansprüche 1 bis 6, **dadurch gekennzeichnet, daß** man einen oder mehrere der Regenerier-, Wasch- und Verdrängungsschritte in jeweils mehreren Ionenaustauscherzellen (Z) parallel und/oder in Reihe durchführt.

## Claims

1. A process for preparing an alcoholic solution of polytetrahydrofuran having terminal OH groups (PTHF) from the corresponding polytetramethylene ether having acyloxy end groups by transesterification with alcohols in the presence of an alkali metal- or alkaline earth metal-containing catalyst followed by passing the alcoholic PTHF solution in the presence of a catalytic amount of water directly through at least one ion exchanger to remove the alkali metal or alkaline earth metal ions, wherein the removal of the alkali metal or alkaline earth metal ions is carried out in a fully continuous ion exchange unit which comprises:
- a plurality of ion exchange cells (Z) which are arranged on a rotary platform and are each provided with a distribution element and a collection element and
- a central valve (V) having a stator disk (S) and a rotor disk (R) via which the introduction and discharge of all liquid streams into or out of the ion exchange unit occurs, and
- feed (a) and discharge lines (b) from the distribution or collection element of each ion exchange cell (Z) to the central valve (V).

2. A process as claimed in claim 1, wherein the transesterification is carried out in the presence of a sodium-containing catalyst.

3. A process as claimed in claim 1 or 2, wherein the ion exhange unit has from 20 to 30 ion exchange cells (Z).

4. A process as claimed in any of claims 1 to 3, wherein the feed and discharge lines from the distribution or collection element of each ion exchange cell (Z) to the central valve (V) are flexible hoses.

5. A process as claimed in any of claims 1 to 4, wherein the central valve (V) and the rotary platform are each controlled separately, in particular with the rotary platform being operated fully continuously and the central valve (V) being operated in a pulsed fashion.

6. A process as claimed in any of claims 1 to 5, wherein the ion exchange process is carried out in parallel and/or in series in a plurality of ion exchange cells (Z).

7. A process as claimed in any of claims 1 to 6, wherein one or more of the regeneration, washing and displacement steps are each carried out in parallel and/or in series in a plurality of ion exchange cells (Z).

## Revendications

1. Procédé de préparation d'une solution alcoolique de polytétrahydrofuranne à groupes OH terminaux (PTHF) à partir du polytétraméthylèneéther à groupes acyloxy terminaux correspondant par transestérification avec des alcools en présence d'un catalyseur contenant du métal alcalin ou alcalino-terreux, procédé dans lequel la solution alcoolique de PTHF est, à la suite de la transestérification, conduite directement au travers d'au moins un échangeur d'ions pour isoler les ions de métal alcalin ou alcalino-terreux en présence d'une quantité catalytique d'eau, **caractérisé en ce qu'**on effectue l'isolement des ions de métal alcalin ou alcalino-terreux dans une installation d'échange d'ions totalement continue qui présente :
- plusieurs cellules d'échange d'ions (Z) qui sont agencées sur une plate-forme tournante et dotées chacune d'un élément distributeur et d'un élément collecteur,
- une vanne centrale (V) pourvue d'un disque de stator (S) et d'un disque de rotor (R) par l'intermédiaire de laquelle l'amenée et l'évacuation de l'ensemble des courants de liquide ont lieu dans l'installation d'échange d'ions, ainsi que
- des conduits d'amenée (a) et d'évacuation (b) allant de l'élément distributeur ou respectivement collecteur de chaque cellule d'échange d'ions (Z) à la vanne centrale (V).

2. Procédé suivant la revendication 1, **caractérisé en ce qu'**on effectue la transestérification en présence d'un catalyseur contenant du sodium.

3. Procédé suivant l'une des revendications 1 et 2, **caractérisé en ce que** l'installation d'échange d'ions présente 20 à 30 cellules d'échange d'ions (Z) .

4. Procédé suivant l'une des revendications 1 à 3, **caractérisé en ce que** les conduits d'amenée et d'évacuation allant de l'élément distributeur ou respectivement collecteur de chaque cellule d'échange d'ions (Z) à la vanne centrale (V) sont des tuyaux flexibles.

5. Procédé suivant l'une des revendications 1 à 4, **caractérisé en ce que** la vanne centrale (V) et la plate-forme tournante sont commandées séparément, en particulier **en ce que** la plate-forme est mise en service de manière totalement continue et la vanne centrale (V) de manière cadencée.

6. Procédé suivant l'une des revendications 1 à 5, **caractérisé en ce qu'**on effectue le processus d'échange d'ions dans plusieurs cellules d'échange d'ions (Z) disposées en parallèle et/ou en série.

7. Procédé suivant l'une des revendications 1 à 6, **caractérisé en ce qu'**on effectue une ou plusieurs des étapes de régénération, de lavage et de déplacement dans chaque fois plusieurs cellules d'échange d'ions (Z) disposées en parallèle et/ou en série.
